# EUROPÄISCHE PATENTSCHRIFT

(11) **EP 2 503 188 B1**
(45) Veröffentlichungstag und Bekanntmachung des Hinweises auf die Patenterteilung: **21.01.2015**
(21) Anmeldenummer: 11159863.7
(22) Anmeldetag: 25.03.2011
(51) Int. Cl.: F16H 47/02, F16H 61/30

(54) **Schaltzylinder für eine Antriebseinrichtung, insbesondere für eine selbstfahrende Arbeitsmaschine, Antriebseinrichtung, Arbeitsmaschine sowie Verfahren zum Betreiben einer Arbeitsmaschine**
Switching cylinder for a drive device, in particular for a self-propelled work machine, drive device, work machine and method for operating a work machine
Cylindre de commutation pour un dispositif d'entraînement, notamment pour un engin automobile, dispositif d'entraînement, machine de travail et son procédé de fonctionnement dans ledit engin.

(43) Veröffentlichungstag der Anmeldung: 26.09.2012
(73) Patentinhaber: NAF Neunkirchener Achsenfabrik AG, 91077 Neunkirchen (DE)
(72) Erfinder: Schnabel, Bernhard, 82319 Starnberg (DE)
(74) Vertreter: Hofstetter, Schurack & Partner

(56) Entgegenhaltungen:
- EP-A1- 1 600 666
- EP-A1- 2 202 413
- CH-A- 222 927
- JP-U- 52 098 092
- JP-U- 53 115 290

## Beschreibung

Die Erfindung betrifft einen Schaltzylinder für eine Antriebseinrichtung, insbesondere für eine selbstfahrende Arbeitsmaschine, eine Antriebseinrichtung der im Oberbegriff des Patentanspruchs 9 angegebenen Art, eine Arbeitsmaschine sowie ein Verfahren der im Oberbegriff des Patentanspruchs 15 angegebenen Art zum Betreiben einer Arbeitsmaschine.

Die DE 44 04 829 A1 offenbart ein Lastschaltgetriebe für mobile Bau- und Arbeitsmaschinen, mit mindestens zwei über mindestens eine Pumpe antreibbaren Hydromotoren, die eingangswellenseitig jeweils mit mindestens einer Zahnradpaarung in Wirkverbindung stehen. Die Hydromotore sind für einen ersten Fahrbereich der Bau- und Arbeitsmaschine zur Addition der Drehmomente beider Hydromotore über eine Kupplung miteinander verbunden. Das Lastschaltgetriebe umfasst ferner ein mindestens eine Abtriebswelle beinhaltendes Planetengetriebe, dessen Hohlrad über mindestens eine Bremse festsetzbar ist. Dabei ist für einen an den ersten Fahrbereich anschließenden weiteren Fahrbereich der Bau- und Arbeitsmaschine zumindest einer der Hydromotore über die Kupplung von der Antriebswelle des anderen Hydromotors entkuppelbar und über eine weitere Kupplung im Bereich seiner Antriebswelle zur mechanischen Addition der Drehzahlen beider Hydromotore entsprechend dem Überlagerungsprinzip kraftschlüssig auf das Hohlrad des Planetengetriebes kuppelbar. Dieses Lastschaltgetriebe weist eine hohe Teileanzahl und eine hohe Komplexität auf. Darüber hinaus ist es aus dem Serienbau von derartigen Getrieben zum Kuppeln oder Entkuppeln von Hydromotoren bekannt, zur Kupplung der Hydromotoren wenigstens eine Lamellenkupplung zu verwenden. Die Lamellenkupplung wird dabei zum Kuppeln der Hydromotoren mit einem Hydraulikmedium druckbeaufschlagt. Bei einem plötzlichen Druckverlust kann es dann zu einem unbeabsichtigten und ungewünschten Schalten der Lamellenkupplung kommen, sodass die Hydromotore beispielsweise plötzlich entkoppelt oder miteinander gekoppelt werden. Dies kann gegebenenfalls zur Beschädigung der Getriebe und/oder der Hydromotoren führen, falls keine entsprechenden Gegenmaßnahmen getroffen sind.

Das Dokument CH222927 A bildet den nächstliegenden Stand der Technik und offenbart alle Merkmale des Oberbegriffs der Ansprüche 1 und 15

Es ist daher Aufgabe der vorliegenden Erfindung, einen Schaltzylinder für eine wenigstens zwei zur Drehmomentaddition miteinander koppelbare Motoren aufweisende Antriebseinrichtung, insbesondere für eine selbstfahrende Arbeitsmaschine, eine Antriebseinrichtung insbesondere für eine solche Arbeitsmaschine, eine solche Arbeitsmaschine sowie ein Verfahren zum Betreiben einer solchen Arbeitsmaschine bereitzustellen, durch welche mit einfachen Mitteln eine sicherere Kopplung und Entkopplung zweier Motoren ermöglich ist.

Diese Aufgabe wird durch einen Schaltzylinder mit den Merkmalen des Patentanspruchs 1, durch eine Antriebseinrichtung mit den Merkmalen des Patentanspruchs 9, durch eine Arbeitmaschine mit den Merkmalen des Patentanspruchs 14 und durch ein Verfahren zum Betreiben einer Arbeitsmaschine mit den Merkmalen des Patentanspruchs 15 gelöst.

Der erste Aspekt der Erfindung betrifft einen Schaltzylinder für eine Antriebseinrichtung, welche wenigstens zwei Motoren aufweist, die zur Addition der Drehmomente der Motoren miteinander koppelbar sind. Der erfindungsgemäße Schaltzylinder umfasst ein Zylinderelement, welches einen Arbeitsraum aufweist. In dem Arbeitsraum ist ein erster Kolben aufgenommen, welcher relativ zu dem Arbeitsraum verschiebbar, insbesondere längs verschiebbar, ist. Ferner ist in dem Arbeitsraum ein zweiter Kolben aufgenommen, welcher ebenso relativ zu dem Arbeitsraum verschiebbar, insbesondere längs verschiebbar, ist. Durch den ersten und den zweiten Kolben ist der Arbeitsraum in eine erste, eine zweite und in eine dritte Arbeitskammer unterteilt. Die dritte Arbeitskammer ist dabei, insbesondere in Längserstreckungsrichtung des Zylinderelements, zwischen der ersten und der zweiten Arbeitskammer angeordnet.

Der ersten Arbeitskammer ist ein erster Anschluss des Schaltzylinders zugeordnet, über welchen die erste Arbeitskammer mit einem Arbeitsmedium, insbesondere mit Hydraulikflüssigkeit, beaufschlagbar ist. Dadurch ist der die erste Arbeitskammer teilweise begrenzende erste Kolben mit Druck zu beaufschlagen.

Der zweiten Arbeitskammer, die über die dritte Arbeitskammer von der ersten Arbeitskammer beabstandet ist, ist ein zweiter Anschluss zugeordnet. Über den zweiten Anschluss ist auch die zweite Arbeitskammer mit einem Arbeitmedium, insbesondere mit Hydraulikflüssigkeit, beaufschlagbar. Dadurch kann der die zweite Arbeitkammer teilweise begrenzende zweite Kolben mit Druck beaufschlagt werden.

Durch die Beaufschlagung des ersten und/oder des zweiten Kolbens mit dem entsprechenden Arbeitsmedium und damit mit dem entsprechenden Druck können die Kolben in dem Arbeitsraum relativ zu diesem verschoben werden, was mit einer Volumenvergrößerung bzw. einer Volumenverkleinerung der ersten bzw. der zweiten Arbeitskammer einhergeht.

Der erfindungsgemäße Schaltzylinder umfasst darüber hinaus zumindest ein Federelement, insbesondere eine Druckfeder, welches einerseits an dem ersten Kolben und andererseits an dem zweiten Kolben abstützbar ist. Dabei ist das Federelement beispielsweise in der dritten Arbeitskammer angeordnet. Infolge der Abstützbarkeit des Federelements an den Kolben kann das Federelement gespannt werden, indem die Kolben relativ zueinander bewegt, insbesondere aufeinander zubewegt, werden. Mittels des Federelements sind die Kolben gegenseitig mit einer Federkraft des Federelements kraftbeaufschlagbar.

Dem ersten Kolben ist ein erster Anschlag des Schaltzylinders zugeordnet, mittels welchem eine Bewegung des ersten Kolbens in Richtung des zweiten Kolbens begrenzt ist. Wird die erste Arbeitskammer mit dem Arbeitsmedium beaufschlagt, was mit der Druckbeaufschlagung des ersten Kolbens einhergeht, so wird der erste Kolben in Richtung des zweiten Kolbens bewegt. Der erste Kolben wird dabei infolge der Druckbeaufschlagung so lange in Richtung des zweiten Kolbens bewegt bzw. kann über einen solchen Bewegungsweg hinweg bewegt werden, bis der erste Kolben in Stützanlage mit dem ihm zugeordneten ersten Anschlag kommt. Ist der erste Kolben in Stützanlage mit dem ersten Anschlag bewegt, so kann der erste Kolben nicht mehr weiter in Richtung des zweiten Kolbens bewegt werden, auch wenn der erste Kolben weiterhin über das Arbeitsmedium mit Druck beaufschlagt wird.

Auch dem zweiten Kolben ist ein zweiter Anschlag des Schaltzylinders zugeordnet, mittels welchem eine Bewegung des zweiten Kolbens in Richtung des ersten Kolbens begrenzt ist. Wird beispielsweise die zweite Arbeitskammer mit dem Arbeitsmedium beaufschlagt, wodurch der zweite Kolben mit Druck beaufschlagt wird, so wird dadurch eine Bewegung des zweiten Kolbens in Richtung des ersten Kolbens bewirkt. Der zweite Kolben bewegt sich nun so lange bzw. über einen solchen Bewegungsweg hinweg in Richtung des ersten Kolbens, bis der zweite Kolben in Stützanlage mit dem ihm zugeordneten zweiten Anschlag kommt. Ist der zweite Kolben in Stützanlage mit dem zweiten Anschlag bewegt, so kann der zweite Kolben nicht weiter in Richtung des ersten Kolbens bewegt werden, auch wenn der zweite Kolben weiterhin über das Arbeitsmedium mit Druck beaufschlagt wird.

Der erfindungsgemäße Schaltzylinder, über welchen beispielsweise eine Kopplungseinrichtung zum Koppeln der Motoren der Antriebseinrichtung zwischen einem ersten, die Motoren miteinander koppelnden Zustand und einem zweiten, die Motoren voneinander entkoppelnden Zustand schaltbar ist, weist eine besonders geringe Teileanzahl und damit eine besonders geringe Komplexität auf. Dies geht mit einem geringen Bauraumbedarf, einem geringen Gewicht sowie mit geringen Kosten einher.

Darüber hinaus ermöglicht der erfindungsgemäße Schaltzylinder ein besonders sicheres Schalten der Kopplungseinrichtung und damit Koppeln bzw. Entkoppeln der Motoren, da ein plötzliches Beenden der Druckbeaufschlagung des ersten oder des zweiten Kolbens über das entsprechende Arbeitsmedium nicht zu einer unerwünschten Bewegung des ersten Kolbens und/oder des zweiten Kolbens in dem Arbeitsraum relativ zu dem Zylinderelement führt. Dadurch ist ein unerwünschtes Schalten der Kopplungseinrichtung und damit ein unerwünschtes Koppeln der erwünschterweise entkoppelten Motoren bzw. ein unerwünschtes Entkoppeln der erwünschterweise gekoppelten Motoren vermieden. Dadurch wird auch eine Beschädigung der Kopplungseinrichtung und/oder der Motoren infolge des unerwünschten Schaltens der Kopplungseinrichtung unter allen Betriebszuständen zuverlässig verhindert.

Zum Bewegen des zweiten Kolbens in Richtung des ersten Kolbens ist vorgesehen, dass eine zweite auf den zweiten Kolben wirkende Kraft, welche aus der Beaufschlagung des zweiten Kolbens mit dem Arbeitsmedium und damit aus einem zweiten Druck des Arbeitsmediums in der zweiten Arbeitskammer resultiert, größer ist als eine Federkraft, welche der zweiten Kraft entgegenwirkt und welche infolge der Abstützung des Federelements einerseits am zweiten Kolben andererseits am ersten Kolben auf den zweiten Kolben wirkt. Die zweite Kraft und die Federkraft sind dabei größer als eine erste auf den ersten Kolben wirkende Kraft, welche aus der Druckbeaufschlagung des ersten Kolbens mit dem Arbeitsmedium der ersten Arbeitskammer und somit aus einem ersten Druck des Arbeitsmediums in der ersten Arbeitskammer entgegen der zweiten Kraft gegebenenfalls wirkt.

Zum Bewegen des ersten Kolbens in Richtung des zweiten Kolbens sind dazu umgekehrte Kräfteverhältnisse vorgesehen. Dabei ist die erste, infolge der Druckbeaufschlagung des ersten Kolbens mit dem Arbeitsmedium in der ersten Arbeitskammer auf den ersten Kolben wirkende Kraft größer als die Federkraft des Federelements, welche infolge der Abstützung bzw. Abstützbarkeit des Federelements einerseits an dem ersten Kolben und andererseits an dem zweiten Kolben auf den ersten Kolben wirkt und welche der ersten Kraft entgegengerichtet ist. Die erste Kraft und die Federkraft sind dabei größer als die zweite Kraft, die gegebenenfalls infolge einer Druckbeaufschlagung des zweiten Kolbens auf den zweiten Kolben und damit entgegen der ersten Kraft wirkt.

Vorteilhafterweise ist beim Bewegen des zweiten Kolbens in Richtung des ersten Kolbens die erste Kraft und damit der Druck in der ersten Arbeitskammer zumindest im Wesentlichen null. Besonders vorteilhaft ist zum Bewegen des ersten Kolbens in Richtung des zweiten Kolbens die zweite Kraft und damit der Druck in der zweiten Arbeitskammer zumindest im Wesentlichen null.

Bei einer vorteilhaften Ausführungsform der Erfindung ist der erste Kolben in einer Schaltstellung des Schaltzylinders an dem ersten Anschlag abgestützt, wobei eine kraftbeaufschlagte Abstützung des ersten Kolbens über das Federelement an dem zweiten Kolben vermieden ist. Mit anderen Worten ist in dieser ersten Schaltstellung das Federelement zwischen dem ersten und dem zweiten Kolben nicht gespannt (aufgeladen), sodass der erste Kolben durch Entspannen (Entladen) des Federelements nicht infolge eines Zusammenwirkens mit dem zweiten Kolben in dem Arbeitsraum relativ zu dem Arbeitsraum bewegt wird.

Ist die erste Kammer mit Arbeitsmedium beaufschlagt was mit einer Druckbeaufschlagung des ersten Kolbens einhergeht, und kommt es zu einem plötzlichen Druckverlust in der ersten Arbeitskammer, sodass der erste Kolben mit einem geringeren Druck oder nicht mehr mit einem Druck beaufschlagt wird, so bewirkt dieser plötzliche Druckverlust keine plötzliche unerwünschte Bewegung des ersten Kolbens in dem Arbeitsraum relativ zum Arbeitsraum. Eine solche unerwünschte Relativbewegung ist vermieden, da infolge der Vermeidung der kraftbeaufschlagten Abstützung des ersten Kolbens über das Federelement an dem zweiten Kolben sich der erste Kolben nicht an dem zweiten Kolben abdrücken, abstoßen oder dergleichen wechselwirken kann.

Der erste Kolben verbleibt auch bei dem plötzlichen Druckverlust in seiner gewünschten Stellung in dem Arbeitsraum relativ zu dem Arbeitsraum. Dadurch wird ein unerwünschtes Schalten der Kopplungseinrichtung vermieden. Dabei ist es beispielsweise vorgesehen, dass die Erstreckung des Federelements und des Arbeitsraums derart bemessen sind, dass in dieser ersten Schaltstellung des Schaltzylinders das Federelement entspannt ist und keine Federkraft auf den ersten Kolben wirkt.

Bei einer weiteren vorteilhaften Ausführungsform der Erfindung ist der zweite Kolben in einer zweiten Schaltstellung des Schaltzylinders an dem zweiten Anschlag abgestützt, wobei der erste Kolben durch Abstützen des ersten Kolbens über das zwischen den Kolben gespannte Federelement an dem zweiten Kolben kraftbeaufschlagt ist. Durch Druckbeaufschlagung der zweiten Arbeitskammer und somit des zweiten Kolbens wird der zweite Kolben bis zu dem zweiten Anschlag in Richtung des ersten Kolbens bewegt. Dadurch wird das Federelement gespannt und mit der Federkraft des Federelements beaufschlagt. Da der zweite Kolben an dem ihm zugeordneten zweiten Anschlag anliegt, wird der erste Kolben lediglich mit der definierten Federkraft beaufschlagt, welche unabhängig von dem Druck des Arbeitsmediums in der zweiten Arbeitskammer und damit unabhängig von der in Folge des Drucks auf den zweiten Kolben wirkenden Kraft (zweite Kraft) ist. Mit anderen Worten erfährt der erste Kolben lediglich eine definierte, vom dem Druck des Arbeitsmediums weitgehend unabhängige Kraft infolge der Federkraft. Unter Beaufschlagung dieser Kraft wird dann der erste Kolben beispielsweise in dem Arbeitsraum von dem zweiten Kolben bewegt, bis diese Bewegung des ersten Kolbens beispielsweise durch einen weiteren Anschlag, z. B. eine Wandung des Zylinders, begrenzt und beendet wird.

Kommt es plötzlich zu einem Druckverlust bzw. Druckabfall in der zweiten Arbeitskammer, bewirkt dies keine unerwünscht Bewegung des ersten Kolbens in dem Arbeitsraum relativ zu dem Arbeitsraum. Dies bedeutet, dass der erste Kolben seine gewünschte Stellung in dem Arbeitsraum relativ zu dem Arbeitsraum zumindest im Wesentlichen beibehält. Lediglich der zweite Kolben wird in dem Arbeitsraum relativ zu dem Arbeitsraum bewegt bzw. verschoben, da der zweite Kolben über das zwischen den Kolben gespannte Federelement kraftbeaufschlagt an dem ersten Kolben abgestützt ist. Der zweite Kolben wird dann so lange bzw. so weit unter Kraftbeaufschlagung durch das Federelement bewegt, bis das Federelement entspannt (entladen) ist und/oder bis dann Federelement in Stützanlage mit einem dem Federelement zugeordneten Anschlag kommt. Dieser dem Federelement zugeordnete Anschlag begrenzt dann das Entspannen und somit eine Längenänderung, insbesondere eine Längenvergrößerung, des Federelement, sodass der zweite Kolben nicht weiter bewegt wird.

Dies bedeutet, dass auch bei einem plötzlichen Druckverlust der zweiten Arbeitkammer eine unerwünschte Bewegung des ersten Kolbens in dem Arbeitsraum relativ zu dem Arbeitsraum bei dem erfindungsgemäßen Schaltzylinder vermieden ist. Dadurch kann ein unerwünschtes Schalten der Kopplungseinrichtung mit einfachen und kostengünstigen Mitteln vermieden werden.

Bei einer weiteren vorteilhaften Ausführungsform der Erfindung ist das Federelement an dem ersten Kolben vorgespannt. Dadurch ist es ermöglicht, dass sich das Federelement lediglich in seinem gewünschten Arbeitsbereich bewegt. Ein nicht benötigter Arbeitsbereich zwischen der vollständigen Entspannung des Federelement und derjenigen Längserstreckung des Federelements, die der erste Kolben zum Schalten der Kopplungseinrichtung insbesondere zum Koppeln der Motoren bewegt wird, wird auf dem ersten Kolben vorgespannt. So kann das Zylinderelement hinsichtlich seiner Längserstreckung besonders klein ausgestalten werden, sodass der erfindungsgemäße Schaltzylinder einen besonders geringen Bauraumbedarf aufweist. Auch bei dieser Vorspannung wirkt in der ersten Schaltstellung keine Kraft auf den ersten Kolben infolge einer Abstützung des Federelements an dem zweiten Kolben, sodass auch bei der Vorspannung eine unerwünschte Bewegung des ersten Kolbens bei plötzlichem Druckverlust vermieden ist.

Zum Vorspannen des Federelements ist das Federelement vorteilhafterweise einerseits an einer ersten, an dem ersten Kolben angeordneten Abstützfläche und andererseits an einer zweiten, von der ersten Abstützfläche beabstandeten und an dem ersten Kolben angeordneten Abstützfläche abstützbar. So kann das Federelement besonders definiert vorgespannt werden. Ebenso kann dadurch das Zylinderelement besonders klein insbesondere hinsichtlich seiner Längserstreckung ausgebildet werden.

Vorteilhafterweise ist die zweite Abstützfläche durch ein Abstützelement gebildet, welches zum Einstellen der Vorspannung des Federelements relativ zu der ersten Abstützfläche bewegbar an dem ersten Kolben gelagert ist. Durch diese Bewegbarkeit der Abstützflächen relativ zueinander kann die Vorspannung des Federelements auf einen gewünschten und definierten Wert eingestellt werden. Dies kommt der Funktionserfüllung des erfindungsgemäßen Schaltzylinders und damit der gesamten Antriebseinrichtung zugute.

In weiterer Ausgestaltung ist der erste und/oder der zweite Anschlag außerhalb des Arbeitsraums angeordnet. Dadurch kann die Vorspannung des Federelements besonders einfach und bedarfsgerecht eingestellt werden. Insbesondere kann das Federelement nach einer gewissen Lebensdauer des Schaltzylinders nachgestellt werden, sodass die vorteilhafte Funktionserfüllung des erfindungsgemäßen Schaltzylinders auch über eine hohe Lebensdauer hinweg besonders zuverlässig gewährleistet ist.

Bei einer weiteren vorteilhaften Ausführungsform der Erfindung umfasst der Schaltzylinder eine mit dem ersten Kolben verbundene Schubstange, welche mit dem ersten Kolben mitbewegbar ist und welche über eine Durchtrittsöffnung des Zylinderelements aus dem Arbeitsraum herausgeführt ist. Dadurch ist es möglich, auf besonders vorteilhafte Weise die Kopplungseinrichtung der Antriebseinrichtung zu schalten und so die Motoren über den erfindungsgemäßen Schaltzylinder zu koppeln oder voneinander zu entkoppeln.

Der erfindungsgemäße Schaltzylinder ist besonders vorteilhaft bei einer Antriebseinrichtung verwendbar, welche für eine selbstfahrende Arbeitsmaschine ausgebildet ist. Insbesondere bei einer solchen selbstfahrenden Arbeitmaschine stellt beispielsweise einer der Motoren eine hohe Zugkraft der Arbeitsmaschine bereit, welche jedoch nur in einem geringen Geschwindigkeitsbereich der Arbeitsmaschine anliegt, da dieser erste Motor mit nur geringen Drehzahlen zu betreiben ist. Der andere Motor stellt eine demgegenüber eine geringe Zugkraft der Arbeitsmaschine bereit, kann jedoch über einen größeren Geschwindigkeitsbereich betrieben werden, sodass die Arbeitsmaschine auch schneller als mittels des ersten Motors gefahren werden kann. Der erfindungsgemäße Schaltzylinder ermöglicht dabei eine besonders bedarfsgerechte Schaltung zwischen einem ersten und einem zweiten Betriebszustand der Arbeitsmaschine, wobei beispielsweise die Motoren in dem ersten Betriebszustand miteinander zur Drehmomentenaddition gekoppelt sind und die Arbeitsmaschine mit relativ geringen Geschwindigkeiten und einer relativ hohen Zugkraft betrieben werden kann. In dem zweiten Betriebszustand sind die Motoren voneinander entkoppelt, sodass die Arbeitsmaschine mit einer relativ geringen Zugkraft und mit relativ hohen Geschwindigkeiten betrieben werden kann.

Der zweite Aspekt der Erfindung betrifft eine Antriebseinrichtung, insbesondere für eine selbstfahrende Arbeitsmaschine, welche wenigstens zwei Motoren und eine Kopplungseinrichtung umfasst. Mittels der Kopplungseinrichtung sind die Motoren in einem ersten Schaltzustand der Kopplungseinrichtung miteinander zur Addition der Drehmomente der Motoren gekoppelt. In einem zweiten Schaltzustand der Kopplungseinrichtung sind die Motoren voneinander entkoppelt.

Erfindungsgemäß umfasst die Antriebseinrichtung einen Schaltzylinder gemäß einem der vorhergehenden Ausführungsbeispiele, über welchen die Kopplungseinrichtung zwischen den Schaltzuständen schaltbar ist. Vorteilhafte Ausgestaltungen des ersten Aspekts der Erfindung sind als vorteilhafte Ausgestaltungen des zweiten Aspekts der Erfindung anzusehen und umgekehrt.

Der Schaltzylinder ermöglicht dabei ein sicheres Schalten der Kopplungseinrichtung zwischen den Schaltzuständen und vermeidet eine unerwünschte Schaltung der Kopplungseinrichtung von einem der Schaltzustände in den anderen. Gleichzeitig weist der Schaltzylinder eine nur geringe Komplexität auf und verursacht daher nur geringe Kosten, was einer geringen Komplexität der gesamten Antriebseinrichtung zugute kommt und zu erheblichen Kostensenkungen führt.

In dem ersten Schaltzustand der Kopplungseinrichtung werden die Drehmomente der Motoren addiert, sodass die Arbeitsmaschine mit relativ geringen Geschwindigkeiten, jedoch mit einer relativ hohen Zugkraft betrieben werden kann. In dem zweiten Betriebszustand kann die Arbeitsmaschine mit relativ hohen Geschwindigkeiten und mit einer relativ geringen Zugkraft betrieben werden. Dadurch ist die Arbeitsmaschine besonders bedarfsgerecht betreibbar.

Bei einer vorteilhaften Ausführungsform des zweiten Aspekts der Erfindung ist der erste Kolben in dem zweiten Schaltzustand der Kopplungseinrichtung am ersten Anschlag abgestützt, wobei eine kraftbeaufschlagte Abstützung des ersten Kolbens über das Federelement an dem zweiten Kolben vermieden ist. Dies bedeutet, dass der zweite Schaltzustand der Kopplungseinrichtung mit dem ersten Schaltzustand des Schaltzylinders korrespondiert. In diesem zweiten Schaltzustand der Kopplungseinrichtung sind die Motoren voneinander entkoppelt, wobei die Kopplungseinrichtung geöffnet ist. Wie bereits im Zusammenhang mit dem erfindungsgemäßen Schaltzylinder geschildert, kommt es bei einem plötzlichen Druckverlust in der ersten Arbeitskammer nicht zu einer unerwünschten Relativbewegung des ersten Kolbens in dem Arbeitsraum relativ zu dem Arbeitsraum. Dies bedeutet, dass der plötzliche Druckverlust keinen Einfluss auf die Schaltstellung des Schaltzylinders und damit keinen Einfluss auf den Schaltzustand der Kopplungseinrichtung hat. Somit kommt es bei dem plötzlichen Druckverlust zu nicht zu einem unerwünschten Koppeln der Motoren, was die Motoren gegebenenfalls beschädigen oder gar zerstören würde.

Bei einer weiteren vorteilhaften Ausführungsform des zweiten Aspekts der Erfindung ist der zweite Kolben in dem ersten Schaltzustand der Kopplungseinrichtung an dem zweiten Anschlag abgestützt, wobei der erste Kolben durch Abstützen des ersten Kolbens über das zwischen den beiden Kolben gespannte Federelement an dem zweiten Kolben kraftbeaufschlagt ist. Kommt es zu einem unerwünschten und plötzlichen Druckverlust in der zweiten Arbeitskammer, so wird lediglich der zweite Kolben durch das sich entspannende Federelement relativ zu dem Arbeitsraum bewegt. Der erste Kolben jedoch verbleibt in seiner gewünschten Relativstellung zu dem Arbeitsraum, sodass auch bei einem Druckverlust in der zweiten Arbeitskammer ein unerwünschtes Schalten der Kopplungseinrichtung verhindert ist. Damit hat auch der Druckverlust in der zweiten Arbeitskammer keinen Einfluss auf die Schaltstellung des Schaltzylinders und damit auf den Schaltzustand der Kopplungseinrichtung.

Darüber hinaus birgt die erfindungsgemäße Antriebseinrichtung den Vorteil, dass der erste Kolben in dem ersten Schaltzustand der Kopplungseinrichtung, das heißt bei geschlossener Kopplungseinrichtung, wodurch die Motoren miteinander gekoppelt sind, mittels des Federelements mit einer Federkraft beaufschlagt ist. Dadurch kommt es trotz Druckschwankungen in der zweiten Arbeitskammer nicht zu Schwankungen einer Kopplungskraft, mittels welcher die Motoren über die Kopplungseinrichtung im ersten Schaltzustand miteinander gekoppelt sind. Auch eine plötzliche Druckerhöhung des Drucks in der zweiten Arbeitskammer führt nicht zu einer Veränderung, insbesondere nicht zu einer Erhöhung, der Kopplungskraft, da die Bewegung des zweiten Kolbens in Richtung des ersten Kolbens durch den zweiten Anschlag begrenzt ist. So kann sich der zweite Kolben nicht weiter in Richtung des ersten Kolbens bewegen, das Federelement nicht noch weiter spannen und den ersten Kolben somit nicht mit einer noch höheren Kraft beaufschlagen.

Bei einer weiteren vorteilhaften Ausführungsform der Erfindung sind die Motoren als mittels eines Arbeitsmediums antreibbare Hydraulikmotoren ausgebildet. Dadurch ist die Arbeitsmaschine besonders effizient, kostengünstig und mit einer hohen Zugkraft betreibbar.

Vorteilhafterweise umfasst die Antriebseinrichtung lediglich eine Pumpeinrichtung, mittels der sowohl die erste Arbeitskammer als auch die zweite Arbeitskammer des Schaltzylinders mit dem Arbeitsmedium zu versorgen sind. Dies hält die Teileanzahl, den Bauraumbedarf, die Kosten und das Gewicht der Antriebseinrichtung besonders gering.

In weiterer Ausgestaltung umfasst die Arbeitseinrichtung lediglich eine Pumpeinrichtung, mittels welcher beide Hydraulikmotoren mit dem Arbeitsmedium zu versorgen sind. Auch dies hält das Gewicht, die Teileanzahl, den Bauraumbedarf und die Kosten der erfindungsgemäßen Antriebseinrichtung besonders gering.

Bevorzugt ist die Pumpeinrichtung, mittels welcher beide Hydraulikmotoren mit dem Arbeitsmedium zu versorgen sind, auch die Pumpeinrichtung, mittels welcher die erste und die zweite Arbeitskammer mit dem Arbeitsmedium zu versorgen sind. Dies bedeutet, dass lediglich eine einzige Pumpeinrichtung sowohl zum Versorgen der Hydraulikmotoren als auch zum Versorgen der ersten und der zweiten Arbeitskammer vorgesehen ist.

Der dritte Aspekt der Erfindung betrifft eine Arbeitsmaschine, insbesondere eine landgebundene, selbstfahrende Arbeitsmaschine, welche einen erfindungsgemäßen Schaltzylinder und/oder eine erfindungsgemäße Antriebseinrichtung umfasst. Vorteilhafte Ausgestaltungen der ersten beiden Aspekte der Erfindung sind als vorteilhafte Ausgestaltungen des dritten Aspekt der Erfindung anzusehen und umgekehrt. Somit ist die erfindungsgemäße Arbeitsmaschine bedarfsgerecht und sicher betreibbar und weist nur geringe Kosten auf.

Der vierte Aspekt der Erfindung betrifft ein Verfahren zum Betreiben einer Arbeitsmaschine, insbesondere einer selbstfahrenden Arbeitsmaschine, die eine wenigstens zwei Motoren und eine Kopplungseinrichtung umfassende Antriebseinrichtung aufweist. Zum Betreiben der Arbeitsmaschine in einem ersten Betriebszustand der Arbeitsmaschine werden bei dem Verfahren die Motoren mittels einer Kopplungseinrichtung miteinander gekoppelt, sodass die Drehmomente der Motoren addiert werden. Zum Betreiben der Arbeitsmaschine in einem zweiten Betriebszustand werden die Motoren voneinander entkoppelt.

In dem ersten Betriebszustand kann die Arbeitsmaschine beispielsweise mit einer hohen Zugkraft und mit relativ geringen Geschwindigkeiten betrieben werden, während die Arbeitsmaschine in dem zweiten Betriebszustand mit einer demgegenüber geringeren Zugkraft und mit demgegenüber höheren Geschwindigkeiten betrieben werden kann.

Erfindungsgemäß wird die Kopplungseinrichtung über einen erfindungsgemäßen Schaltzylinder zwischen den Betriebszuständen geschalten. Zum Koppeln der Motoren wird der zweite Kolben durch Beaufschlagen der zweiten Arbeitskammer mit Arbeitsmedium in Richtung des ersten Kolbens bewegt. Dadurch wird das Federelement zwischen den Kolben gespannt. In der Folge bewirkt das gespannte (aufgeladene) Federelement eine Bewegung des ersten Kolbens relativ zu dem zweiten Kolben von dem zweiten Kolben weg. Die Bewegung des zweiten Kolbens ist beendet, sobald keine Beaufschlagung mit Arbeitsmedium mehr erfolgt bzw. sobald der zweite Kolben in Stützanlage mit dem zweiten Anschlag kommt. Bei gekoppelten Motoren verbleibt der zweite Kolben bevorzugt in Stützanlage mit dem zweiten Anschlag.

Zum Entkoppeln der Motoren wird der erste Kolben durch Beaufschlagen der ersten Arbeitskammer über den ersten Anschluss mit Arbeitsmedium in Richtung des zweiten Kolbens bewegt. Dadurch wird das Federelement zwischen den Kolben gespannt. In der Folge bewirkt das Federelement eine Bewegung des zweiten Kolbens relativ zu dem ersten Kolben von dem ersten Kolben weg. Die Bewegung des ersten Kolbens ist beendet, sobald keine Beaufschlagung mit Arbeitsmedium mehr erfolgt bzw. sobald der erste Kolben in Stützanlage mit dem ersten Anschlag kommt. Bei entkoppelten Motoren verbleibt der erste Kolben bevorzugt in Stützanlage mit dem ersten Anschlag. Vorteilhafte Ausgestaltungen der ersten drei Aspekte der Erfindung sind als vorteilhafte Ausgestaltungen des vierten Aspekts der Erfindung anzusehen.

Das erfindungsgemäße Verfahren ermöglicht das Schalten zwischen den Betriebszuständen der Arbeitsmaschine mit relativ einfachen und unkomplexen Mitteln, insbesondere in Form des Schaltzylinders, was mit geringen Kosten zum Durchführen des Verfahrens einhergeht. Ferner vermeidet das erfindungsgemäße Verfahren einen unerwünschten Wechsel der Betriebszustände der Arbeitsmaschine infolge eines unerwünschten Schaltens der Kopplungseinrichtung. Kommt es beispielsweise zu einem plötzlichen Druckverlust in der zweiten Arbeitskammer während des ersten Betriebszustands der Arbeitsmaschine, so entspannt sich das Federelement wodurch, der zweite Kolben relativ zu dem ersten Kolben von dem ersten Kolben wegbewegt wird. Der erste Kolben jedoch verbleibt zumindest im Wesentlich ortsfest im Arbeitsraum, sodass dieser Druckabfall keinen Einfluss auf die Schaltstellung des Schaltzylinders hat.

Kommt es zu einem plötzlichen Druckverlust in der ersten Arbeitskammer während des zweiten Betriebszustands der Arbeitsmaschine, so kommt es dabei ebenso nicht zu einer unerwünschten Bewegung des ersten Kolbens in dem Arbeitsraum relativ zu dem Arbeitsraum, da der erste Kolben in dem zweiten Betriebszustand nicht über das Federelement kraftbeaufschlagt an dem zweiten Kolben abgestützt ist. Dieser Druckverlust führt somit nicht zu einer Längenveränderung, insbesondere einer Längung, des Federelement, sodass auch keine Bewegung des ersten Kolbens in dem Arbeitraum relativ zu dem Arbeitsraum bewirkt wird.

Der erste Betriebszustand der Arbeitsmaschine korrespondiert dabei zum ersten Schaltzustand der Kopplungseinrichtung der erfindungsgemäßen Antriebseinrichtung und zur zweiten Schaltstellung des erfindungsgemäßen Schaltzylinders. Dementsprechend korrespondiert der zweite Betriebszustand der Arbeitsmaschine zum zweiten Schaltzustand der Kopplungseinrichtung der erfindungsgemäßen Antriebseinrichtung und zur ersten Schaltstellung des erfindungsgemäßen Schaltzylinders.

Ein weiterer Vorteil ist, dass zum Schalten der Arbeitsmaschine und damit der Kopplungseinrichtung sowie des Schaltzylinders nur relativ geringe Druckunterschiede zwischen der ersten und der zweiten Arbeitskammer vonnöten sind. Dadurch kann auch bei relativ stark schwankendem Speisedruck, mit welchem die erste und die zweite Arbeitskammer und gegebenenfalls die Hydraulikmotoren mit dem Arbeitsmedium versorgt werden, zwischen den Betriebszuständen geschaltet werden.

Die vier Aspekte der Erfindung sind insbesondere bei Lastschaltgetrieben einer selbstfahrenden Arbeitsmaschine verwendbar, welche ohne Zugkraftunterbrechung zwischen den zwei Betriebszuständen schaltbar ist. Zur Angleichung unterschiedlicher Drehzahlen der Motoren, insbesondere wenn die Motoren miteinander gekoppelt werden, ist beispielsweise wenigstens ein Synchronring vorgesehen. Mittels des Synchronrings können jeweilige Ausgangwellen der Motoren auf eine zumindest im Wesentlichen gleiche gemeinsame Drehzahl gebracht werden. Ebenso sind die vier Aspekte der Erfindung auch bei anderweitigen Getrieben einsetzbar, welche beispielsweise wenigstens eine Lamellenkupplung zum Koppeln der Motoren umfassen. Ebenso sind die vier Aspekte der Erfindung vorteilhafterweise verwendbar bei einer Antriebseinrichtung mit wenigstens einer Kupplung, welche zum Koppeln der Motoren Reibelemente umfasst, die auch bei unterschiedlichen und schwankenden Druckverhältnissen zwischen der ersten und der zweiten Arbeitskammer zumindest im Wesentlichen stets mit der zumindest im Wesentlich gleichen Kraft zu betätigen sind. Dabei sind die Kolben lediglich entsprechend ihrer Dimensionen derart auszugestalten, um auch bei sehr geringen Drücken das Federelement ausreichend spannen zu können, sodass der zweite Kolben zumindest im Wesentlichen stets vollständig bis zum zweiten Anschlag bewegt werden und in Stützanlage mit dem zweiten Anschlag verbracht werden kann.

Weitere Vorteile, Merkmale und Einzelheiten der Erfindung ergeben sich aus der folgenden Beschreibung von Ausführungsbeispielen sowie anhand der Zeichnung. Die vorstehend in der Beschreibung genannten Merkmale und Merkmalskombinationen sowie die nachfolgend in der Figurenbeschreibung genannten und/oder in der Figuren alleine gezeigten Merkmale und Merkmalskombinationen sind nicht nur in den jeweils angegebenen Kombinationen, sondern auch in anderen Kombinationen oder alleinstehend verwendbar, ohne den Rahmen der Erfindung zu verlassen.

Die Zeichnung zeigt in:
- Fig. 1: eine Prinzipdarstellung einer Antriebseinrichtung für eine landgebundene, selbstfahrende Arbeitsmaschine, mit zwei Hydraulikmotoren, welche mittels einer Kopplungseinrichtung zwischen einem ersten Betriebszustand und einem zweiten Betriebszustand schaltbar ist, wobei die Hydraulikmotoren in dem ersten Betriebszustand zur Addition der Drehmomente der Hydraulikmotoren miteinander gekoppelt sind und wobei in dem zweiten Betriebszustand die Hydraulikmotoren voneinander gekoppelt sind;
- Fig. 2: eine schematische Längsschnittansicht des Schaltzylinders der Antriebseinrichtung gemäß Fig. 1;
- Fig. 3: eine schematische Längsschnittansicht einer weiteren Ausführungsform des Schaltzylinders gemäß Fig. 2.

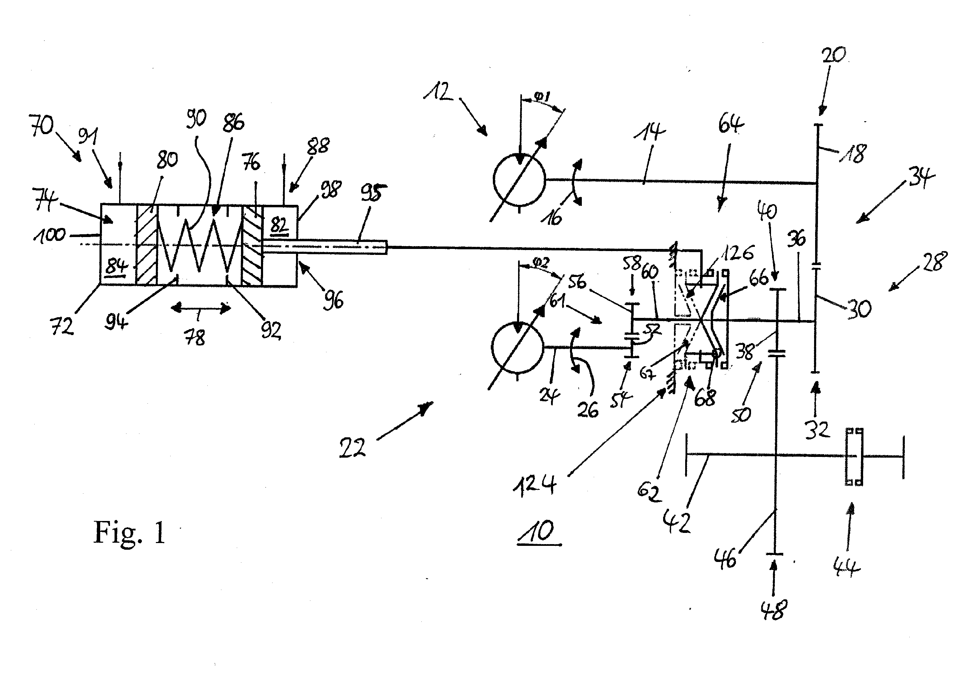

Die Fig. 1 zeigt eine Antriebseinrichtung 10 für eine selbstfahrende, landgebundene Arbeitsmaschine. Die Antriebseinrichtung 10 umfasst einen ersten Hydraulikmotor 12, welcher mittels einer Hydraulikflüssigkeit antreibbar ist. Der Hydraulikmotor 12 umfasst eine Abtriebswelle 14, welche um eine Drehachse in eine erste Drehrichtung sowie in eine zweite, der ersten Drehrichtung entgegengesetzten Drehrichtung drehbar ist. Dies ist durch einen Richtungspfeil 16 angedeutet. Mit der Abtriebswelle 14 ist ein Zahnrad 18 drehfest verbunden, welches eine Verzahnung 20 aufweißt. Das Zahnrad 18 ist beispielsweise als Stirnrad ausgebildet.

Die Antriebseinrichtung 10 umfasst einen zweiten Hydraulikmotor 22, welcher mittels der Hydraulikflüssigkeit antreibbar ist. Zum Antreiben des ersten Hydraulikmotors 12 und des zweiten Hydraulikmotors 22 sind beide Hydraulikmotoren 12 und 22 mittels lediglich einer den Hydraulikmotoren 12 und 22 gemeinsamen Pumpeinrichtung der Antriebseinrichtung 10 mit der Hydraulikflüssigkeit zu versorgen. Dadurch weist die Antriebseinrichtung 10 eine geringe Teileanzahl, ein geringes Gewicht, geringe Kosten und einen geringen Bauraumbedarf auf.

Auch der Hydraulikmotor 22 weist eine Abtriebswelle 24 auf. Die Abtriebswelle 24 ist um eine Drehachse in eine erste Drehrichtung sowie in eine zweite, der ersten Drehrichtung entgegengesetzten Drehrichtung drehbar. Dies ist durch einen Richtungspfeil 26 angedeutet. Die Antriebseinrichtung 10 umfasst ferner ein Verteilergetriebe 28, welches wahlweise von dem ersten Hydraulikmotor 12 oder von beiden Hydraulikmotoren 12 und 22 antreibbar ist.

Der erste Hydraulikmotor 12 ist über die Abtriebswelle 14 und das Zahnrad 18 permanent mit einem Verteilergetriebe 28, welches auch als Lastschaltgetriebe bezeichnet wird, gekoppelt. Dazu umfasst das Verteilergetriebe 28 ein Zahnrad 30, welches eine Verzahnung 32 aufweist. Auch das Zahnrad 30 kann dabei als Stirnrad ausgebildet sein. Die Zahnräder 18 und 30 stehen über die jeweiligen Verzahnungen 20 und 32 miteinander im Eingriff. Durch das Zahnrad 18 und das Zahnrad 30 ist ein Zahnradpaar 34 gebildet, welches beispielsweise eine Übersetzung von zumindest im Wesentlichen 0,8 aufweist. Dabei weist die Verzahnung 20 beispielsweise siebenunddreißig Zähne auf, während die Verzahnung 32 einunddreißig Zähne aufweist.

Das Zahnrad 30 ist mit einer Welle 36 des Verteilergetriebes 28 drehfest verbunden. Dadurch wird die Welle 36 über das Zahnrad 30, das Zahnrad 18 und die Abtriebswelle 14 von dem ersten Hydraulikmotor 12 angetrieben und um eine Drehachse gedreht. Mit der Welle 36 ist ebenso ein Zahnrad 38 drehfest verbunden, welches durch Drehen der Welle 36 ebenso gedreht wird. Das Zahnrad 38 weist eine Verzahnung 40 auf. Das Zahnrad 38 kann ebenso als Stirnrad ausgebildet sein.

Das Verteilergetriebe 28 umfasst ferner Abtriebswellenteile 42 und 44, welche mit Rädern der Arbeitsmaschine drehfest gekoppelt oder koppelbar sind. Dadurch können die mit den Abtriebswellenteilen 42 und 44 gekoppelten Räder angetrieben werden, wodurch die Arbeitsmaschine angetrieben werden kann.

Dazu sind die Abtriebswellenteile 42 und 44 mit einem Zahnrad 46 drehfest gekoppelt oder koppelbar, welches eine Verzahnung 48 aufweist. Dabei kann auch das Zahnrad 46 als Stirnrad ausgebildet sein. Die Zahnräder 38 und 46 stehen über ihre jeweiligen Verzahnungen 40 und 48 miteinander im Eingriff, sodass die Abtriebswellenteile 42 und 44 über das Zahnrad 46 und das Zahnrad 38 von der Welle 36 angetrieben werden können. Durch die Zahnräder 38 und 46 ist ein Zahnradpaar 50 dargestellt, welches beispielsweise eine Übersetzung zumindest im Wesentlichen 2,3 aufweist. Dazu weist die Verzahnung 40 beispielsweise einundzwanzig Zähne auf, während die Verzahnung 48 beispielsweise neunundvierzig Zähne aufweist.

Die Abtriebswelle 24 des Hydraulikmotors 22 ist drehfest mit einem Zahnrad 52 verbunden, welches beispielsweise als Stirnrad ausgebildet ist und eine Verzahnung 54 aufweist. Zu dem Zahnrad 52 korrespondiert ein Zahnrad 56 mit einer Verzahnung 58, wobei das Zahnrad 56 auch als Stirnrad ausgebildet sein kann. Das Zahnrad 56 ist drehfest mit einer Welle 60 des Verteilergetriebes 28 verbunden. Dabei stehen die Zahnräder 56 und 52 über ihre jeweiligen Verzahnungen 54 und 58 miteinander im Eingriff, sodass die Welle 60 über die Zahnräder 56 und 52 und die Abtriebswelle 24 von dem Hydraulikmotor 22 angetrieben werden kann. Durch die Zahnräder 52 und 56 ist ein Zahnradpaar 62 gebildet, welches beispielsweise eine Übersetzung von zumindest im Wesentlichen 2,7 aufweist. Dazu umfasst die Verzahnung 54 beispielsweise neunzehn Zähne während die Verzahnung 58 beispielsweise zweiundfünfzig Zähne umfasst.

Die Welle 60 ist mit einem Synchronring 62 einer Kopplungseinrichtung 64 die Antriebseinrichtung 10 drehfest verbunden oder verbindbar. Der Synchronring 62 ist dabei in axialer Richtung der Welle 60 relativ zur Welle 60 bewegbar und beispielsweise auf der Welle 60 bewegbar gelagert. Dadurch ist der Synchronring 62 zwischen zwei Schaltzuständen schaltbar, sodass die Kopplungseinrichtung 64 zwei Schaltzustände aufweist. Ein erster dieser Schaltzustände korrespondiert dabei zu einem ersten Betriebszustand der Arbeitsmaschine, während der zweite Schaltzustand der Kopplungseinrichtung 64 zu einem zweiten Betriebszustand der Arbeitsmaschine korrespondiert.

Der Synchronring 62 umfasst beispielsweise zumindest im Wesentlichen kegelförmige Reibelemente 66, 67. Zum Reibelement 66 korrespondiert ein zumindest im Wesentlichen kegelförmiges Reibelement 68, welches drehfest mit der Welle 36 verbunden ist.

In der zweiten Schaltstellung der Kopplungseinrichtung 64 sind die Reibelemente 66 und 68 voneinander beabstandet, sodass die Wellen 60 und 36 voneinander entkoppelt sind. Dies bedeutet, dass in dem zweiten Schaltzustand die Hydraulikmotoren 12 und 22 voneinander entkoppelt sind. Die Kopplungseinrichtung 64 ist geöffnet.

Zum Herbeiführen der ersten Schaltstellung und somit zum Koppeln der Hydraulikmotoren 12 und 22 durch drehfestes Koppeln der Wellen 36 und 60 werden die Reibelemente 66 und 68 in gegenseitige Anlage relativ zueinander bewegt. Da sich die Welle 36 infolge ihrer Kopplung mit dem Hydraulikmotor 12 gegebenenfalls mit einer höheren Geschwindigkeit dreht als die Welle 60, ermöglichen die Reibelemente 66 und 68 eine Angleichung der Drehzahlen der Wellen 36 und 60. Nach Angleichen der Drehzahl mittels des Synchronrings 62 kann die Kopplungseinrichtung 64 vollständig geschlossen werden (eingekuppelt werden), wobei vorteilhafterweise eine Übertragung von Kräften und/oder Drehmomenten zwischen den Wellen 60 und 36 infolge eines Formschlusses erfolgt. Dazu umfasst die Kopplungseinrichtung 64 bevorzugt wenigstens eine Klauenkupplung mit einer Klauenverzahnung, welche hinterschnittene Zähne aufweist. Diese hinterschnittenen Zähne halten die Kopplungseinrichtung 64 unter Last stets geschlossen, sodass ein unerwünschtes Öffnen der Kopplungseinrichtung 64 unter Last vermieden ist.

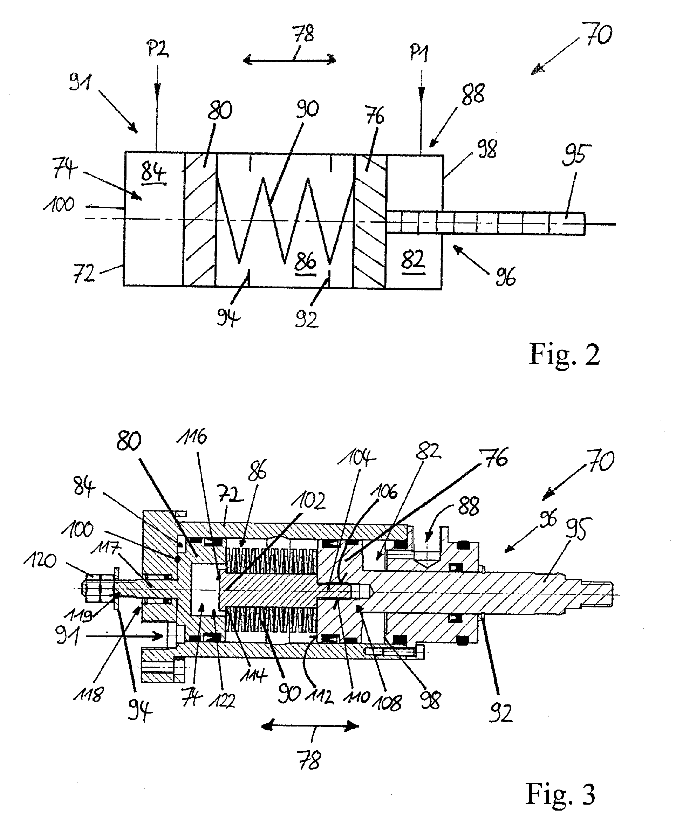

Zum Schalten der Kopplungseinrichtung 64 zwischen dem ersten Schaltzustand und dem zweiten Schaltzustand und damit zum Ermöglichen der Schaltung der Arbeitsmaschine zwischen dem ersten Betriebszustand und dem zweiten Betriebszustand umfasst die Antriebseinrichtung 10 einen Schaltzylinder 70. Der Schaltzylinder 70 ist auch in der Fig. 2 vergrößert dargestellt.

Der Schaltzylinder 70 weist ein Zylinderelement 72 auf, durch welchen ein Arbeitsraum 74 begrenzt ist. In dem Arbeitsraum 74 ist ein erster Kolben 76 relativ zu dem Arbeitsraum 74 in axialer Richtung verschiebbar aufgenommen. Dies ist durch einen Richtungspfeil 78 angedeutet.

In dem Arbeitsraum 74 ist auch ein zweiter Kolben 80 aufgenommen. Auch der Kolben 80 ist in dem Arbeitsraum 74 relativ zu dem Arbeitsraum 74 in axialer Richtung verschiebbar, was durch den Richtungspfeil 78 angedeutet ist. Durch die Kolben 76 und 80 ist der Arbeitsraum in eine erste Arbeitskammer 82, in eine zweite Arbeitskammer 84 sowie in eine dritte 86 unterteilt. Die dritte Arbeitskammer 86 ist dabei in axialer Richtung des Zylinderelements 72 zwischen der ersten Arbeitskammer 82 und der zweiten Arbeitskammer 84 angeordnet.

Der Schaltzylinder 70 weist einen ersten, der ersten Arbeitskammer 82 zugeordneten fluidischen Anschluss 88 auf, über welchen die erste Arbeitskammer 82 mit einer Hydraulikflüssigkeit beaufschlagbar ist. Der Schaltzylinder 70 umfasst ferner einen zweiten fluidischen Anschluss 91, welcher der zweiten Arbeitskammer 84 zugeordnet ist und über welchen die zweite Arbeitkammer 84 mit der Hydraulikflüssigkeit beaufschlagbar ist. Bevorzugt sind die Arbeitskammern 82 und 84 über die Hydraulikmotoren 12 und 22 und somit mittels derselben Pumpeinrichtung mit der Hydraulikflüssigkeit zu versorgen wie die Hydraulikmotoren 12 und 22.

Der Schaltzylinder 70 umfasst ferner eine Druckfeder 90, welche einerseits an dem ersten Kolben 76 und andererseits an dem zweiten Kolben 80 abgestützt und in der dritten Arbeitskammer 86 angeordnet ist. Mittels der Druckfeder 90 sind die Kolben 76 und 80 gegenseitig mittels einer durch die Druckfeder 90 bewirkten Federkraft kraftbeaufschlagbar.

Dem ersten Kolben 76 ist ein erster Anschlag 92 des Schaltzylinders 70 zugeordnet, mittels welchem eine Bewegung des ersten Kolbens 76 in Richtung des zweiten Kolbens 80 begrenzt ist. Analog dazu ist dem zweiten Kolben 80 ein zweiter Anschlag 94 zugeordnet, mittels welchem eine Bewegung des zweiten Kolbens 80 in Richtung des ersten Kolbens 76 begrenzt ist. Die Anschläge 92 und 94 sind beispielsweise durch Wandungen des Zylinderelements 72 des Schaltzylinders 70 gebildet. Der erste Kolben 76 ist mit einer Schubstange 95 verbunden, welche mit dem ersten Kolben 76 mitbewegbar ist.

Die Schubstange 95 ist dabei über eine Durchtrittsöffnung 96 des Zylinderelements 72 aus dem Arbeitsraum 74 herausgeführt. Ferner ist die Schubstange 95 mit dem Synchronring 62 der Kopplungseinrichtung 64 gekoppelt, sodass durch axiales Bewegen der Schubstange 95 der Synchronring 62 relativ zu den Wellen 36 und 60 in axialer Richtung dieser bewegt werden kann.

Zum Schließen der Kopplungseinrichtung 64, d. h. zum Herbeiführen des ersten Betriebszustands der Arbeitsmaschine, wird die zweite Arbeitskammer 84 mit Hydraulikflüssigkeit beaufschlagt, sodass in der zweiten Arbeitskammer 84 ein Druck P2 herrscht, welcher auf den zweiten Kolben 80 wirkt. Aus diesem Druck resultiert in Abhängigkeit von einer Fläche des zweiten Kolbens 80, auf welche der Druck P2 wirkt, eine zu dem zweiten Kolben 80 korrespondierende zweite Kraft. Diese zweite Kraft ist dabei höher als eine gegebenenfalls durch die Druckfeder 90 infolge ihrer Abstützung an dem ersten Kolben 76 auf den zweiten Kolben 80 wirkende Federkraft sowie größer als eine zu dem ersten Kolben 76 korrespondierende erste Kraft, welche gegebenenfalls infolge der Beaufschlagung der ersten Arbeitskammer 82 mit der Hydraulikflüssigkeit mit einem Druck P1 entgegen der zweiten Kraft wirkt. Dadurch wird der zweite Kolben 80 in Richtung des ersten Kolbens 76 bewegt, bis der zweite Kolben 80 in Stützanlage mit dem zweiten Anschlag 94 kommt.

Dadurch wird die Druckfeder 90 gespannt, sodass der erste Kolben 76 eine definierte und von dem Druck P2 unabhängige Kraft erfährt, welche von der gespannten Druckfeder 90 ausgeht. Die von der Druckfeder 90 ausgehende Kraft ist dabei größer als die gegebenenfalls wirkende erste Kraft. Mit dieser auf den ersten Kolben wirkenden und von der Druckfeder 90 ausgehenden Kraft wird der erste Kolben 76 von dem zweiten Kolben 80 wegbewegt, wodurch das Reibelement 66 auf das Reibelement 68 zubewegt wird. Wenn die Drehzahlen der Wellen 36 und 60 synchronisiert sind, bewegt sich der ersten Kolben 76 bis zu seiner Endstellung im Arbeitsraum 74, bis er beispielsweise an einer den Arbeitsraum 74 und die erste Arbeitskammer 82 begrenzenden Stirnwandung 98 des Zylinderelements 72 abgestützt ist.

Bei einem plötzlichen Druckabfall des Drucks P2 verbleibt der erste Kolben 76 in seiner Relativstellung zu dem Arbeitsraum 74, während der zweite Kolben 80 durch die Federkraft der Druckfeder 90 bewegt wird, bis die Druckfeder 90 entspannt ist bzw. keine Federkraft mehr auf den zweiten Kolben 80 wirkt. Die Kopplungseinrichtung 64 bleibt jedoch geschlossen. Dies ist insbesondere durch die Klauenverzahnung realisiert, durch welche die Kopplungseinrichtung 64 auch bei Druckverlust zumindest im Wesentlichen stets ihren momentanen Schaltzustand hält. Ein weiterer Vorteil des Schaltzylinders 70 ist, dass auch bei unterschiedlichen Drücken P1 und P2 zumindest im Wesentlichen stets dasselbe Reibmoment beim Schließen (Einkuppeln) der Kopplungseinrichtung 64 vorliegt und auf die Kopplungseinrichtung 64 wirkt. Daher kann die Kopplungseinrichtung 64 vorteilhaft und sicher von einem so genannten Speisedruck der Antriebseinrichtung 10 geschlossen werden. Da zumindest im Wesentlichen stets beim Schalten der Kopplungseinrichtung 64 die gleiche konstante Kraft an der Schubstange 95 auch bei unterschiedlichen Drücken P1 und P2 vorliegt, ist ein zumindest im Wesentlichen stets gleiches Reib- und Synchronisierungsverhalten der Kopplungseinrichtung 64 gegeben.

Dadurch können die Hydraulikmotoren 12 und 22 sowie beide Arbeitskammern 82 und 84 mit einer gemeinsamen Pumpeinrichtung mit der Hydraulikflüssigkeit mit dem Speisedruck versorgt werden, wobei ein Schwanken des Speisedrucks nicht zu einer Schwankung des Reibmoments und damit der Reibleistung der Kopplungseinrichtung 64 führt. Dies ist insbesondere durch die Federbelastung des ersten Kolbens 76 realisiert, wobei es durch den Schaltzylinder 70 ebenso ermöglicht ist, dass sich die Relativstellung des ersten Kolbens 76 zu dem Arbeitsraum 74 bei einem unerwünschten und plötzlichen Druckverlust zumindest im Wesentlichen nicht ändert.

Zum Öffnen der Kopplungseinrichtung 64, d. h. zum Herbeiführen des zweiten Betriebszustands der Arbeitsmaschine, wird die erste Arbeitskammer 82 mit Hydraulikflüssigkeit beaufschlagt, so dass in der ersten Arbeitskammer 82 der Druck P1 herrscht. Dieser Druck P1 wirkt auf den ersten Kolben 76. In Abhängigkeit von einer Fläche des ersten Kolbens 76, auf die der Druck P1 wirkt, resultiert aus dem Druck P1 die erste Kraft, welche in Richtung des zweiten Kolbens 80 wirkt. Dabei ist die erste Kraft größer als eine durch die Druckfeder 90 gegebenenfalls auf den ersten Kolben 76 entgegen der ersten Kraft wirkende Kraft und größer als die zweite Kraft, wobei die durch die Druckfeder 90 wirkende Kraft größer ist als die zweite Kraft.

Somit wird zum Einkuppeln der erste Kolben 76 in Richtung des zweiten Kolbens 80 bewegt, bis der erste Kolben 76 in Stützanlage mit dem ersten Anschlag 92 kommt. Die erste Kraft wirkt dabei zumindest im Wesentlichen direkt und ohne durch die Druckfeder 90 und ihre ausgeübte Kraft beeinflusst zu werden auf die Schubstange 95 und somit auf die Kopplungseinrichtung 64. Durch das Bewegen des ersten Kolbens 76 in Richtung des zweiten Kolbens 80 wird die Druckfeder 90 gespannt, sodass eine Federkraft durch die Druckfeder 90 auf den zweiten Kolben 80 wirkt. Durch diese Federkraft wird der zweite Kolben 80 in Richtung einer weiteren Stirnwandung 100 des Zylinderelements 72 bewegt, durch welche der Arbeitsraum 74 und die zweite Arbeitskammer 84 teilweise begrenzt ist. Die axiale Erstreckung (Länge) der Druckfeder 90 sowie des Zylinderelements 72 und damit des Arbeitsraums 74 sind beispielsweise derart bemessen, dass bei geöffneter Kopplungseinrichtung 64 keine Federkraft mehr auf den ersten Kolben 76 wirkt. Somit führt ein plötzlicher Druckverlust des Drucks P1 ebenfalls nicht zu einer unerwünschten Bewegung des ersten Kolbens 76 relativ zu dem Arbeitsraum 74 und damit zu einem unerwünschten Schalten der Kopplungseinrichtung 64.

Mit anderen Worten haben somit weder der Druckverlust des Drucks P2 noch der Druckverlust des Drucks P1 einen Einfluss auf den Schaltzustand der Kopplungseinrichtung 64 und damit auf den Betriebszustand der Arbeitsmaschine.

Bei der Antriebseinrichtung 10 kann vorgesehen sein, dass die Reibelement 66 und 68 lediglich zum kurzzeitigen Ausgleich der unterschiedlichen Drehzahlen der Wellen 36 und 60 beim Einkuppeln dienen. Somit können die Reibelemente 66 und 68 besonders klein hinsichtlich ihrer Dimensionen ausgestaltet werden, wodurch sie insbesondere kleiner sein können als beispielsweise eine Lamellenkupplung. Ein weiterer Vorteil der Kopplungseinrichtung 64 ist, dass das Wechseln der Betriebszustände ohne Zugkraftunterbrechung ermöglicht ist.

Die Fig. 3 zeigt eine weitere Ausführungsform des Schaltzylinders 70. Der Schaltzylinder 70 gemäß Fig. 3 umfasst eine Kolbenstange 102 mit einem Gewindeschaft 104, der ein Außengewinde 106 aufweist. Der erste Kolben 76 weist eine zu dem Schraubenschaft 104 korrespondierende Aufnahme 108 auf, welche beispielsweise als Bohrung ausgebildet ist. Die Aufnahme 108 ist mit einem zu dem Außengewinde 106 korrespondierenden Innengewinde 110 versehen, in welches der Schraubenschaft 104 über sein Außengewinde 106 zumindest bereichsweise eingeschraubt ist. Dadurch ist die Kolbenstange 102 zumindest bereichsweise in der Aufnahme 108 des ersten Kolbens 76 aufgenommen.

Wie der Fig. 3 zu entnehmen ist, ist die Druckfeder 90 mittels der Kolbenstange 102 an dem ersten Kolben 76 vorgespannt. Dazu ist die Druckfeder 90 einerseits an einer ersten Abstützfläche 112 des ersten Kolbens 76 und andererseits an einer Abstützfläche 114 der Kolbenstange 102 abgestützt. Dabei sind die Abstützflächen 112 und 114 in axialer Richtung voneinander beabstandet, wobei die Druckfeder 90 zwischen den beabstandeten Abstützflächen 112 und 114 vorgespannt ist. Die Abstützfläche 112 ist dabei durch den ersten Kolben 76 gebildet, während die Abstützfläche 114 durch einen Bund 116 der Kolbenstange 102 gebildet ist.

Durch Ein- und/oder Ausschrauben der Kolbenstange 102 in bzw. aus der Aufnahme 108 kann der Abstand zwischen den Abstützflächen 112 und 114 bedarfsgerecht eingestellt werden, so dass auch die Vorspannung und damit die Vorspannkraft der Druckfeder 90 bedarfsgerecht eingestellt und gegebenenfalls nachjustiert werden kann.

Die Druckfeder 90 ist dabei an bzw. auf dem ersten Kolben 76 derart vorgespannt, dass es sich nur in ihrem Arbeitsbereich bewegt. Ein nicht benötigter Bereich zwischen vollständig entspannter Druckfeder 90 und derjenigen Länge, die zum vollständigen Einkuppeln bewegt wird, wird an bzw. auf dem ersten Kolben 76 vorgespannt. Dies birgt den Vorteil, dass dadurch das Zylinderelement 72 mit einer besonders geringen axialen Erstreckung ausgebildet werden kann. Auch mit dieser Vorspannung wirkt auch bei dem kürzeren Zylinderelement 72 keine Federkraft mehr auf den ersten Kolben 76 in dem geöffneten zweiten Schaltzustand der Kopplungseinrichtung 64.

Ist die Kopplungseinrichtung 64 geschlossen, so ist der erste Kolben 76 an der Stirnwandung 98 abgestützt und es wirkt noch eine Rest-Federkraft über den zweiten Kolben 80. Bei einem Druckverlust des Drucks P2 schnellt der zweite Kolben 80 jedoch nicht den gesamten Weg bis zum vollständigen Entspannen der Druckfeder 90 zurück in Richtung der Stirnwandung 100. Der zweite Kolben 80 bewegt sich lediglich einen relativ kurzen Weg, bis die Druckfeder 90 in Stützanlage mit der Abstützfläche 114 kommt. Die Federkraft der Druckfeder 90 wird somit von der Kolbenstange 102 und dem Bund 116 abgestützt.

Wie der Fig. 3 ferner zu entnehmen ist, sind die Anschläge 92 und 94 außerhalb des Arbeitsraums 74 angeordnet. So kann die Vorspannung und damit die Druckfeder 90 auf einfache Weise eingestellt und gegebenenfalls insbesondere nachträglich nachjustiert werden.

Dazu ist der zweite Kolben 80 mit einer Stange 117 verbunden, welche über eine Durchtrittsöffnung 118 des Zylinderelements 72 aus dem Arbeitsraum 74 herausgeführt ist.

Die Stange 117 ist mit einem Außengewinde 119 versehen, auf welches Kontermuttern 120 aufgeschraubt sind. Die Kontermuttern dienen dabei dazu, die Vorspannung und damit die Federkraft der Druckfeder 90 variabel einzustellen.

Der zweite Kolben 80 weist eine Aufnahme 122 auf, in welcher die Kolbenstange 102 zumindest bereichsweise aufnehmbar ist. Dadurch kann sich der zweite Kolben 80 insbesondere bei Einkuppeln (Schließen der Kopplungseinrichtung 44) in Richtung des ersten Kolbens 76 bewegen, wobei die Kolbenstange 102 zumindest bereichsweise in Aufnahme 122 hineinbewegt wird. Dadurch kann der Schaltzylinder mit einer besonders geringen axialen Erstreckung ausgebildet werden.

Die Antriebseinrichtung 10 umfasst ferner eine optionale Bremseinrichtung 124 mit einem zu dem Reibelement 67 korrespondierenden Reibelement 126. Das Reibelement 126 ist dabei fest an einem Gehäuseteil abgestützt. In der zweiten Schaltstellung, in welcher die Reibelemente 66 und 68 voneinander beabstandet sind, ist zwischen den Reibelementen 67 und 126 ein Reibschluss ausgebildet, sodass die Reibelemente 67 und 126 drehfest miteinander verbunden sind. Infolge der drehfesten Verbindung der Welle 60 mit dem Synchronring 62 und somit mit dem Reibelement 67 kann auf diese Weise die Welle 60 und über diese die Abtriebswelle 24 des Hydraulikmotors 22 an dem Gehäuseteil festgehalten werden. Dadurch ist ein unkontrolliertes Bewegen der Abtriebswelle 24 im zweiten Betriebszustand der Arbeitsmaschine vermieden.

## Patentansprüche

1. Schaltzylinder (70) für eine wenigstens zwei zur Drehmomentenaddition miteinander koppelbare Motoren (12, 22) aufweisende Antriebseinrichtung (10), insbesondere für eine selbstfahrende Arbeitsmaschine, mit
- einem einen Arbeitsraum (74) aufweisenden Zylinderelement (70),
- einem ersten und einem zweiten in dem Arbeitsraum (74) relativ zu diesem verschiebbar aufgenommenen Kolben (76, 80), durch welche der Arbeitsraum (74) in eine erste, über einen ersten Anschluss (88) des Schaltzylinders (70) mit einem Arbeitsmedium beaufschlagbare Arbeitskammer (82), eine zweite, über einen zweiten Anschluss (91) des Schaltzylinders (70) mit einem Arbeitsmedium beaufschlagbare Arbeitskammer (84) und eine dritte, zwischen der ersten und der zweiten Arbeitskammer (82, 84) angeordnete Arbeitskammer (86) unterteilt ist,
- mit zumindest einem einerseits an dem ersten Kolben (76) und andererseits an dem zweiten Kolben (80) abstützbaren Federelement (90), mittels welchem die Kolben (76, 80) gegenseitig kraftbeaufschlagbar sind, wobei dem ersten Kolben (76) ein erster Anschlag (92) des Schaltzylinders (70) zugeordnet ist, mittels welchem eine Bewegung des ersten Kolbens (76) in Richtung des zweiten Kolbens (80) begrenzt ist, und wobei dem zweiten Kolben (80) ein zweiter Anschlag (94) des Schaltzylinders (70) zugeordnet ist, mittels welchen eine Bewegung des zweiten Kolbens (80) in Richtung des ersten Kolbens (76) begrenzt ist.

2. Schaltzylinder (70) nach Anspruch 1,
**dadurch gekennzeichnet,**
**dass** der erste Kolben (76) in einer Schaltstellung des Schaltzylinders (70) an dem ersten Anschlag (92) abgestützt ist, wobei eine kraftbeaufschlagte Abstützung des ersten Kolbens (76) über das Federelement (90) an dem zweiten Kolben (80) vermieden ist.

3. Schaltzylinder (70) nach einem der Ansprüche 1 oder 2,
**dadurch gekennzeichnet,**
**dass** der zweite Kolben (80) in einer Schaltstellung des Schaltzylinders (70) an dem zweiten Anschlag (94) abgestützt ist, wobei der erste Kolben (76) durch Abstützen des ersten Kolbens (76) über das zwischen den Kolben (76, 80) gespannte Federelement (90) an dem zweiten Kolben (80) kraftbeaufschlagt ist.

4. Schaltzylinder (70) nach einem der vorhergehenden Ansprüche,
**dadurch gekennzeichnet,**
**dass** das Federelement (90) an dem ersten Kolben (76) vorgespannt ist.

5. Schaltzylinder (70) nach Anspruch 4,
**dadurch gekennzeichnet,**
**dass** zum Vorspannen des Federelements (90) das Federelement (90) einerseits an einer ersten, an dem ersten Kolben (76) angeordneten Abstützfläche (112) und andererseits an einer zweiten, von der ersten Abstützfläche (112) beabstandeten und an dem ersten Kolben (76) angeordneten Abstützfläche (114) abstützbar ist.

6. Schaltzylinder (70) nach Anspruch 5,
**dadurch gekennzeichnet,**
**dass** die zweite Abstützfläche (114) durch ein Abstützelement (116) gebildet ist, welches zum Einstellen der Vorspannung des Federelements (90) relativ zu der ersten Abstützfläche (112) bewegbar an dem ersten Kolben (76) gelagert ist.

7. Schaltzylinder (70) nach einem der vorhergehenden Ansprüche,
**dadurch gekennzeichnet,**
**dass** der erste und/oder der zweite Anschlag (91, 94) außerhalb des Arbeitsraums (74) angeordnet ist.

8. Schaltzylinder (70) nach einem der vorhergehenden Ansprüche,
**dadurch gekennzeichnet,**
**dass** der Schaltzylinder (70) eine mit dem ersten Kolben (76) verbundene Schubstange (95) umfasst, welche über eine Durchtrittsöffnung (96) des Zylinderelements (70) aus dem Arbeitsraum (74) herausgeführt ist.

9. Antriebseinrichtung (10), insbesondere für eine selbstfahrende Arbeitsmaschine, mit wenigstens zwei Motoren (12, 22) und mit einer Kopplungseinrichtung (64), mittels welcher die Motoren (12, 22) in einem ersten Schaltzustand der Kopplungseinrichtung (64) miteinander zur Addition der Drehmomente der Motoren (12, 22) gekoppelt und in wenigstens einem zweiten Schaltzustand voneinander entkoppelt sind,
**dadurch gekennzeichnet,**
**dass** die Antriebseinrichtung (10) einen Schaltzylinder (70) nach einem der vorhergehenden Ansprüche umfasst, über welchen die Kopplungseinrichtung (64) zwischen den beiden Schaltzuständen schaltbar ist.

10. Antriebseinrichtung (10) nach Anspruch 9,
**dadurch gekennzeichnet,**
**dass** der erste Kolben (76) in dem zweiten Schaltzustand der Kopplungseinrichtung (64) am ersten Anschlag (92) abgestützt ist, wobei eine kraftbeaufschlagte Abstützung des ersten Kolbens (76) über das Federelement (90) an dem zweiten Kolben (80) vermieden ist.

11. Antriebseinrichtung (10) nach einem der Ansprüche 9 oder 10,
**dadurch gekennzeichnet,**
**dass** der zweite Kolben (80) in dem ersten Schaltzustand der Kopplungseinrichtung (64) an dem zweiten Anschlag (94) abgestützt ist, wobei der erste Kolben (76) durch Abstützen des ersten Kolbens (76) über das zwischen den Kolben (76, 80) gespannte Federelement (90) an dem zweiten Kolben (80) kraftbeaufschlagt ist.

12. Antriebseinrichtung (10) nach einem der Ansprüche 9 bis 11, **dadurch gekennzeichnet,dass** die Motoren (12, 22) als mittels eines Arbeitsmediums antreibbare Hydraulikmotoren (12, 22) ausgebildet sind.

13. Antriebseinrichtung (10) nach Anspruch 12,**dadurch gekennzeichnet, dass** die Antriebseinrichtung (10) lediglich eine Pumpeinrichtung umfasst, mittels welcher die Hydraulikmotoren (12, 22) mit dem Arbeitsmedium zu versorgen sind und/oder mittels welcher sowohl die erste Arbeitskammer (82) als auch die zweite Arbeitskammer (84) mit dem Arbeitsmedium zu versorgen sind.

14. Arbeitsmaschine insbesondere landgebundene, selbstfahrende Arbeitsmaschine, mit einem Schaltzylinder (70) nach einem der Ansprüche 1 bis 8 und/oder mit einer Antriebseinrichtung (10) nach einem der Ansprüche 9 bis 13.

15. Verfahren zum Betreiben einer Arbeitsmaschine, insbesondere einer selbstfahrenden Arbeitsmaschine, mit einer wenigstens zwei Motoren (12, 22) und eine Kopplungseinrichtung (64) umfassenden Antriebseinrichtung (10), bei welchem
- zum Betreiben der Arbeitsmaschine in einem ersten Betriebszustand die Motoren (12, 22) zur Addition der Drehmomente der Motoren (12, 22) mittels der Kopplungseinrichtung (64) miteinander gekoppelt und
- zum Betreiben der Arbeitsmaschine in einem zweiten Betriebszustand die Motoren (12, 22) voneinander entkoppelt werden,**dadurch gekennzeichnet, dass** die Kopplungseinrichtung (64) über einen Schaltzylinder (70) nach einem der Ansprüche 1 bis 8 zwischen den Betriebszuständen geschaltet wird, indem
- zum Koppeln der Motoren (12, 22) der zweite Kolben (80) durch Beaufschlagen der zweiten Arbeitskammer (84) über den zweiten Anschluss (91) mit Arbeitsmedium in Richtung des ersten Kolbens (76) bewegt wird, wodurch das Federelement (90) zwischen den Kolben (76, 80) gespannt wird, welches in der Folge den ersten Kolben (76) relativ zu dem zweiten Kolben (80) von dem zweiten Kolben (80) weg bewegt, oder
- zum Entkoppeln der Motoren (12, 22) der erste Kolben (76) durch Beaufschlagen der ersten Arbeitskammer (82) über den ersten Anschluss (88) mit Arbeitsmedium in Richtung des zweitens Kolben (80) bewegt wird, wodurch das Federelement (90) zwischen den Kolben (76, 80) gespannt wird, welches in der Folge den zweiten Kolben (80) relativ zu dem ersten Kolben (76) von dem ersten Kolben (76) weg bewegt.

## Claims

1. A shift cylinder (70) for a drive device (10) having at least two motors (12, 22) capable of being coupled to each other for torque addition, in particular for an automotive work machine, including:
- a cylinder element (70) having a working space (74),
- a first and a second piston (76, 80) received in the working space (74) displaceably relative to it, by which the working space (74) is divided into a first working chamber (82) capable of being charged with a working medium via a first port (88) of the shift cylinder (70), a second working chamber (84) capable of being charged with a working medium via a second port (91) of the shift cylinder (70) and a third working chamber (86) disposed between the first and the second working chamber (82, 84),
- with at least one spring member (90) capable of being supported on the first piston (76) on the one hand and on the second piston (80) on the other hand, by means of which a force can be mutually applied to the pistons (76, 80), wherein a first stop (92) of the shift cylinder (70) is associated with the first piston (76), by means of which a movement of the first piston (76) towards the second piston (80) is confined, and wherein a second stop (94) of the shift cylinder (70) is associated with the second piston (80), by means of which a movement of the second piston (80) towards the first piston (76) is confined.

2. The shift cylinder (70) according to claim 1,
**characterized in that**
the first piston (76) is supported on the first stop (92) in a shift position of the shift cylinder (70), wherein a force-applied support of the first piston (76) on the second piston (80) via the spring member (90) is avoided.

3. The shift cylinder (70) according to one of claims 1 or 2,
**characterized in that**
the second piston (80) is supported on the second stop (94) in a shift position of the shift cylinder (70), wherein a force is applied to the first piston (76) by supporting the first piston (76) on the second piston (80) via the spring member (90) stressed between the pistons (76, 80).

4. The shift cylinder (70) according to one of the preceding claims,
**characterized in that**
the spring member (90) is biased on the first piston (76).

5. The shift cylinder (70) according to claim 4,
**characterized in that**
for biasing the spring member (90), the spring member (90) can be supported on a first support surface (112) disposed on the first piston (76) on the one hand and on a second support surface (114) spaced from the first support surface (112) and disposed on the first piston (76) on the other hand.

6. The shift cylinder (70) according to claim 5,
**characterized in that**
the second support surface (114) is formed by a support element (116), which is supported on the first piston (76) movably relative to the first support surface (112) for adjusting the bias of the spring member (90).

7. The shift cylinder (70) according to one of the preceding claims,
**characterized in that**
the first and/or the second stop (91, 94) is disposed outside of the working space (74).

8. The shift cylinder (70) according to one of the preceding claims,
**characterized in that**
the shift cylinder (70) includes a push rod (95) connected to the first piston (76), which is passed out of the working space (74) via a passage opening (96) of the cylinder element (70).

9. A drive device (10), in particular for an automotive work machine, including at least two motors (12, 22) and including a coupling device (64), by means of which the motors (12, 22) are coupled to each other for addition of the torques of the motors (12, 22) in a first shift state of the coupling device (64) and are decoupled from each other in at least a second shift state,
**characterized in that**
the drive device (10) includes a shift cylinder (70) according to one of the preceding claims, via which the coupling device (64) is capable of being shifted between the two shift states.

10. The drive device (10) according to claim 9,
**characterized in that**
the first piston (76) is supported on the first stop (92) in the second shift state of the coupling device (64), wherein a force-applied support of the first piston (76) on the second piston (80) via the spring member (90) is avoided.

11. The drive device (10) according to one of claims 9 or 10,
**characterized in that**
the second piston (80) is supported on the second stop (94) in the first shift state of the coupling device (64), wherein a force is applied to the first piston (76) by supporting the first piston (76) on the second piston (80) via the spring member (90) stressed between the pistons (76, 80).

12. The drive device (10) according to one of claims 9 to 11,
**characterized in that**
the motors (12, 22) are formed as hydraulic motors (12, 22) capable of being driven by means of a working medium.

13. The drive device (10) according to claim 12,
**characterized in that**
the drive device (10) includes only one pumping device, by means of which the hydraulic motors (12, 22) are to be supplied with the working medium and/or by means of which both the first working chamber (82) and the second working chamber (84) are to be supplied with the working medium.

14. A work machine, in particular land-based, automotive work machine, including a shift cylinder (70) according to one of claims 1 to 8 and/or including a drive device (10) according to one of claims 9 to 13.

15. A method for operating a work machine, in particular an automotive work machine with a drive device (10) including at least two motors (12, 22) and a coupling device (64), in which
- for operating the work machine in a first operating state, the motors (12, 22) are coupled to each other by means of the coupling device (64) for addition of the torques of the motors (12, 22), and
- for operating the work machine in a second operating state, the motors (12, 22) are decoupled from each other, **characterized in that** the coupling device (64) is shifted via a shift cylinder (70) according to one of claims 1 to 8 between the operating states, by
- moving the second piston (80) towards the first piston (76) by charging the second working chamber (84) with working medium via the second port (91), for coupling the motors (12, 22), whereby the spring member (90) between the pistons (76, 80) is stressed, which as a result moves the first piston (76) away from the second piston (80) relative to the second piston (80), or
- moving the first piston (76) towards the second piston (80) by charging the first working chamber (82) with working medium via the first port (88), for decoupling the motors (12, 22), whereby the spring member (90) between the pistons (76, 80) is stressed, which as a result moves the second piston (80) away from the first piston (76) relative to the first piston (76).

## Revendications

1. Vérin (70) de commande pour un dispositif (10) de propulsion, présentant au moins deux moteurs (12, 22) pouvant être couplés mutuellement pour additionner les couples, en particulier pour un engin automoteur de travaux, avec
- un élément (70) de vérin présentant un espace (74) de travail,
- un premier et un second piston (76, 80), logés dans l'espace (74) de travail de manière mobile par rapport à celui-ci, par lesquels l'espace (74) de travail est subdivisé en une première chambre (82) de travail pouvant être alimentée avec un fluide moteur par l'intermédiaire d'un premier raccordement (88) du vérin (70) de commande, une deuxième chambre (84) de travail, pouvant être alimentée avec un fluide moteur par l'intermédiaire d'un deuxième raccordement (91) du vérin (70) de commande et une troisième chambre (86) de travail, agencée entre la première et la deuxième chambres (82, 84) de travail,
- avec au moins un élément (90) de ressort, pouvant prendre appui d'une part sur le premier piston (76) et d'autre part sur le second piston (80), au moyen duquel les pistons (76, 80) peuvent être alimentés mutuellement en force, moyennant quoi une première butée (92) du vérin (70) de commande est affectée au premier piston (76), au moyen de laquelle un mouvement du premier piston (76) en direction du second piston (80) est limité et moyennant quoi une deuxième butée (94) du vérin (70) de commande est affectée au second piston (80), au moyen de laquelle un mouvement du second piston (80) en direction du premier piston (76) est limité.

2. Vérin (70) de commande selon la revendication 1,
**caractérisé en ce**
**que** le premier piston (76) est appuyé, dans une position de commutation du vérin (70) de commande, sur la première butée (92), moyennant quoi un appui, alimenté par une force, du premier piston (76) sur le second piston (80), par l'intermédiaire de l'élément (90) de ressort, est évité.

3. Vérin (70) de commande selon l'une des revendications 1 ou 2,
**caractérisé en ce**
**que** le second piston (80) est appuyé, dans une position de commutation du vérin (70) de commande, sur la deuxième butée (94), moyennant quoi le premier piston (76) est alimenté par une force par le biais de l'appui du premier piston (76) sur le second piston (80), par l'intermédiaire de l'élément (90) de ressort, tendu entre les pistons (76, 80).

4. Vérin (70) de commande selon l'une des revendications précédentes,
**caractérisé en ce**
**que** l'élément (90) de ressort est précontraint sur le premier piston (76).

5. Vérin (70) de commande selon la revendication 4,
**caractérisé en ce**
**que**, pour précontraindre l'élément (90) de ressort, l'élément (90) de ressort peut être appuyé, d'une part, à une première surface (112) d'appui, agencée sur le premier piston (76) et, d'autre part, à une deuxième surface (114) d'appui, espacée de la première surface (112) d'appui et agencée sur le premier piston (76).

6. Vérin (70) de commande selon la revendication 5,
**caractérisé en ce**
**que** la deuxième surface (114) d'appui est formée par un élément (116) d'appui, lequel est logé, pour régler la précontrainte de l'élément (90) de ressort, de manière mobile par rapport à la première surface (112) d'appui, sur le premier piston (76).

7. Vérin (70) de commande selon l'une des revendications précédentes,
**caractérisé en ce**
**que** la première et / ou la seconde butée (91, 94) est agencée à l'extérieur de l'espace (74) de travail.

8. Vérin (70) de commande selon l'une des revendications précédentes,
**caractérisé en ce**
**que** le vérin (70) de commande comprend une bielle (95), reliée au premier piston (76), la bielle étant sortie de l'espace (74) de travail par l'intermédiaire d'une ouverture (96) de passage de l'élément (70) du vérin.

9. Dispositif (10) de propulsion, en particulier pour un engin automoteur de travaux, avec au moins deux moteurs (12, 22) et avec un dispositif (64) de couplage, au moyen duquel les moteurs (12, 22) sont couplés mutuellement dans un premier état de commutation du dispositif (64) de couplage, pour additionner les couples des moteurs (12, 22) et sont découplés l'un de l'autre en au moins un second état de commutation,
**caractérisé en ce**
**que** le dispositif (10) de propulsion comprend un vérin (70) de commande selon l'une des revendications précédentes, par l'intermédiaire duquel le dispositif (64) de couplage peut être commuté entre les deux états de commutation.

10. Dispositif (10) de propulsion selon la revendication 9,
**caractérisé en ce**
**que** le premier piston (76) est appuyé, dans le second état de commutation du dispositif (64) de couplage, sur la première butée (92), moyennant quoi un appui, alimenté par une force, du premier piston (76) sur le second piston (80), par l'intermédiaire de l'élément (90) de ressort, est évité.

11. Dispositif (10) de propulsion selon l'une des revendications 9 ou 10,
**caractérisé en ce**
**que** le second piston (80) est appuyé, dans le premier état de commutation du dispositif (64) de couplage, sur la seconde butée (94), moyennant quoi le premier piston (76) est alimenté par une force par appui du premier piston (76) sur le second piston (80) par l'intermédiaire de l'élément (90) de ressort, tendu entre les pistons (76, 80).

12. Dispositif (10) de propulsion selon l'une des revendications 9 à 11,
**caractérisé en ce**
**que** les moteurs (12, 22) sont constitués comme des moteurs hydrauliques (12, 22), pouvant être propulsés au moyen d'un fluide moteur.

13. Dispositif (10) de propulsion selon la revendication 12,
**caractérisé en ce**
**que** le dispositif (10) de propulsion comprend uniquement un dispositif de pompage, au moyen duquel les moteurs hydrauliques (12, 22) doivent être approvisionnés en fluide moteur et / ou au moyen duquel tant la première chambre (82) de travail que la deuxième chambre (84) de travail doivent être approvisionnées en fluide moteur.

14. Engin de travaux, en particulier engin automoteur de travaux, terrestre, avec un vérin (70) de commande selon l'une des revendications 1 à 8 et / ou avec un dispositif (10) de propulsion selon l'une des revendications 9 à 13.

15. Procédé d'exploitation d'un engin de travaux, en particulier d'un engin automoteur de travaux, avec un dispositif (10) de propulsion, comprenant au moins deux moteurs (12, 22) et un dispositif (64) de couplage, pour lequel
- pour exploiter l'engin de travaux dans un premier état d'exploitation, les moteurs (12, 22) sont couplés mutuellement au moyen du dispositif (64) de couplage, pour additionner les couples des moteurs (12, 22) et
- pour exploiter l'engin de travaux dans un second état d'exploitation, les moteurs (12, 22) sont découplés l'un de l'autre,
**caractérisé en ce**
**que** le dispositif (64) de couplage est commuté entre les états d'exploitation par l'intermédiaire d'un vérin (70) de commande selon l'une des revendications 1 à 8,
- en déplaçant le second piston (80) dans la direction du premier piston (76), pour coupler les moteurs (12, 22), par approvisionnement de la deuxième chambre (84) de travail en fluide moteur par l'intermédiaire du deuxième raccordement (91), moyennant quoi l'élément (90) de ressort est tendu entre les pistons (76, 80), lequel éloigne par la suite le premier piston (76) du second piston (80) par rapport au second piston (80) ou
- en déplaçant le premier piston (76) dans la direction du second piston (80), pour découpler les moteurs (12, 22), par approvisionnement de la première chambre (82) de travail en fluide moteur par l'intermédiaire du premier raccordement (88), moyennant quoi l'élément (90) de ressort est tendu entre les pistons (76, 80), lequel éloigne par la suite le second piston (80) du premier piston (76) par rapport au premier piston (76).
